# EUROPÄISCHE PATENTSCHRIFT

(11) **EP 2 489 796 B1**
(45) Veröffentlichungstag und Bekanntmachung des Hinweises auf die Patenterteilung: **12.01.2022**
(21) Anmeldenummer: 11001249.9
(22) Anmeldetag: 16.02.2011
(51) Int. Cl.: E03F 5/22, F04D 15/02, G01F 23/296

(54) **Abwasserhebeanlage**
Waste water pumping device
Installation de relèvement d'eaux usées

(43) Veröffentlichungstag der Anmeldung: 22.08.2012
(73) Patentinhaber: Grundfos Management a/s, 8850 Bjerringbro (DK)
(72) Erfinder: Schomäcker, Ralf, 33739 Bielefeld (DE); Jürges, Henning, 23824 Tensfeld (DE)
(74) Vertreter: Patentanwälte Vollmann Hemmer Lindfeld Partnerschaft mbB

(56) Entgegenhaltungen:
- EP-A2- 1 039 272
- JP-A- 2001 241 996
- US-A- 5 408 874
- US-A1- 2002 096 323
- US-A1- 2008 290 011

## Beschreibung

Die Erfindung betrifft eine Abwasserhebeanlage mit einem Behälter und einem darin angeordneten Füllstandsensor.

Derartige Abwasserhebeanlagen finden Verwendung, um Abwässer, welche auf einem Niveau unterhalb der Kanalisation oder weiterführenden Abwasserleitungen anfallen, auf das Niveau der Kanalisation bzw. der Abwasserleitungen zu pumpen. Diese Abwasserhebeanlagen weisen einen Behälter auf, in welchen die zu pumpenden Abwässer einfließen. Aus dem Behälter werden die Abwässer durch eine in dem Behälter oder an dem Behälter angeordnete Pumpe auf das höhere Niveau gepumpt. Abhängig von der gewünschten Leistungsfähigkeit der Hebeanlage können auch mehrere Pumpen vorgesehen sein, welche gemeinsam oder abhängig von den anfallenden Abwassermengen zugeschaltet werden. Das Ein- und Ausschalten der Pumpen erfolgt über einen in dem Behälter angeordneten Füllstandsensor, welcher beim Erreichen eines vorbestimmten Wasserniveaus in dem Behälter die Pumpe einschaltet und beim Erreichen eines minimalen Wasserstandes wieder ausschaltet. In dem Fall, dass mehrere Pumpen vorgesehen sein sollen, können diese bei unterschiedlichen Füllständen zugeschaltet werden. Dazu ist dann ein Füllstandsensor erforderlich, welcher verschiedene vorbestimmte Wasserstände erfassen kann. Alternativ können mehrere Füllstandsensoren vorgesehen sein.

Problematisch bei der Anordnung und Ausgestaltung der Füllstandsensoren ist, dass das Abwasser häufig Verunreinigungen mitführt, welche die Funktion dieser Füllstandsensoren beeinträchtigen können.

Es ist daher Aufgabe der Erfindung, eine Abwasserhebeanlage mit einem Füllstandsensor zu schaffen, welcher dauerhaft zuverlässig funktioniert und unempfindlich gegen Verunreinigungen durch das Abwasser ist.

US 2008/0290011 A1 offenbart eine Abwasserhebeanlage mit einem Behälter und einer darin angeordneten Pumpe. An der Pumpe ist ein Füllstandssensor angebracht, durch dessen Signal die Pumpe ein- und ausgeschaltet wird. Aus US 2008/0290011 A1 ist auch schon ein Niveauschalter, welcher einen Ultraschallmessfühler verwendet, bekannt. EP 1039272 A offenbart ein Ultraschall-Sensormodul zur Messung eines Flüssigkeitsstandes in einem Behälter einer Abwasserhebeanlage. Dadurch kann das Ein- und Ausschalten einer Pumpe gesteuert werden. US 5408874 A offenbart einen Ultraschallsensor im Inneren eines Rohrs zur Bestimmung eines Flüssigkeitsstandes in einem Tank oder Container; es wird keine Abwasserhebeanlage offenbart. JP 2001241996 A offenbart einen Füllstandsensor in einen Tank. Dabei kommen ein Ultraschallsensor auf dem Tank und ein Rohr im Tank zum Einsatz, es wird auch hier keine Abwasserhebeanlage offenbart.

Diese Aufgabe wird durch eine Abwasserhebeanlage mit den in Anspruch 1 angegebenen Merkmalen gelöst. Bevorzugte Ausführungsformen ergeben sich aus den Unteransprüche, der nachfolgenden Beschreibung sowie den beigefügten Figuren.

Die erfindungsgemäße Abwasserhebeanlage weist wie bekannte Abwasserhebeanlagen einen Behälter auf, welcher zur Aufnahme des zu fördernden bzw. zu hebenden Abwassers vorgesehen ist. Dazu weist der Behälter zumindest eine Eintrittsöffnung zum Anschluss einer Abwasserleitung auf. Ferner ist in dem Behälter in bekannter Weise eine Pumpe angeordnet oder anordbar. Alternativ kann der Behälter so ausgestaltet sein, dass er zur Anordnung einer Pumpe außerhalb des Behälter vorgesehen ist, welche geeignet ist, das Abwasser aus dem Inneren des Behälter auf ein gewünschtes höheres Niveau zu pumpen. Darüber hinaus weist die Abwasserhebeanlage zumindest einen Füllstandsensor auf, welche im Inneren des Behälters angeordnet ist. Dieser Füllstandsensor ist mit einer Steuereinrichtung signalverbunden oder weist eine Steuereinrichtung auf, welche in Abhängigkeit des Flüssigkeitsniveaus im Inneren des Behälter die zumindest eine Pumpe, welche in oder an dem Behälter angeordnet ist, ein- und ausschaltet. Zusätzlich kann die Steuereinrichtung auch zur Drehzahlregelung der zumindest einen Pumpe vorgesehen sein. Wie beschrieben, können je nach Größe der Anlage auch mehrere Pumpen vorgesehen sein. Dann ist die Steuereinrichtung derart ausgebildet, dass sie die einzelnen Pumpen in Abhängigkeit des Flüssigkeitsniveaus im Inneren des Behälter ein- und ausschalten kann. So kann beispielsweise eine erste Pumpe bei einem ersten Flüssigkeitsniveau bzw. Wasserstand eingeschaltet werden und eine zweite bei einem zweiten höheren Niveau oder Wasserstand eingeschaltet werden.

Erfindungsgemäß weist der Füllstandsensor einen an der Oberseite des Behälters angeordneten Ultraschallsensor auf. Dabei kann der Ultraschallsensor an einer Öffnung des Behälters außerhalb des Behälters oder an der Oberseite im Inneren des Behälters angeordnet sein. Der Ultraschallsensor ist ein Sensor, welcher ein Ultraschallsignal aussendet und ein reflektiertes Ultraschallsignal erfassen kann. Dabei ist der Ultraschallsensor oder eine an diesen angeschlossen Steuereinrichtung so ausgebildet, dass der Abstand eines Objektes, an dem Ultraschallsignal reflektiert wird, bestimmt werden kann. Für diese Abstandsbestimmung ist eine Auswerteelektronik vorgesehen, welche entweder in den Ultraschallsensor selber oder eine an diesen angeschlossene Steuereinrichtung integriert ist.

Der Ultraschallsensor ist bei der erfindungsgemäßen Abwasserhebeanlage derart ausgestaltet und angeordnet, dass das von ihm erzeugte Ultraschallsignal in vertikaler Richtung nach unten ausgesendet wird, d. h. zur Unterseite des Behälters hin ausgesendet wird. Ein Aufnahmebereich zum Erfassen des reflektierten Ultraschallsignals ist entsprechend angeordnet, sodass er ein vertikal nach oben gerichtetes reflektiertes Ultraschallsignal erfassen kann. Es ist zu verstehen, dass die Ultraschallquelle und der Aufnahmebereich zum Erfassen des reflektierten Ultraschallsignals nicht zwingend in einer Baueinheit integriert sein müssen. Vielmehr ist unter einem Ultraschallsensor im Sinne der Erfindung auch die Anordnung einer Ultraschallquelle und eines separaten Aufnahmeelementes zum Erfassen eines reflektierten Ultraschallsignals zu verstehen.

Durch die beschriebene Anordnung des Ultraschallsensors wird erreicht, dass das ausgesandte Ultraschallsignal auf den Wasser- bzw. Flüssigkeitsspiegel im Behälter trifft und von diesem zurück nach oben reflektiert wird. Der Ultraschallsensor bzw. dessen Aufnahmebereich erfasst das reflektierte Signal. Beispielsweise aus der Laufzeit des Signals zum Flüssigkeitsspiegel und zurück kann der Abstand des Flüssigkeitsspiels vom Ultraschallsensor bestimmt werden. Da der Ultraschallsensor in einer festen Position eingebaut ist, kann somit die Höhe des Flüssigkeitsspiegels im Behälter aus der Laufzeit des Signals erfasst werden.

Die Verwendung eines solchen Ultraschallsensor hat den Vorteil, dass der eigentliche Sensor, nämlich der Ultraschallsensor beabstandet von dem Abwasser in dem Behälter angeordnet werden kann und so vor Verunreinigungen durch das Abwasser geschützt ist. Darüber hinaus sind keine beweglichen Teile für den Füllstandsensor erforderlich, wodurch die Betriebssicherheit erhöht wird, da ein Verklemmen oder Blockieren beweglicher Teile nicht auftreten kann.

Wie oben beschrieben wird der Abstand des Flüssigkeitsspiegels von dem Ultraschallsensor vorzugsweise aus der Laufzeit des Signals ermittelt. Der Ultraschallsensor ist daher vorzugsweise so ausgestaltet, dass er eine entsprechende Auswertung vornehmen kann, um die Laufzeit des Signals und damit den Abstand zu bestimmen. Die hierfür erforderliche Auswerteelektronik kann in den Ultraschallsensor selber oder eine mit diesem signalverbunden Steuereinrichtung integriert sein.

Erfindungsgemäß weist der Füllstandsensor ein sich vertikal in dem Behälter erstreckendes Rohr auf, weiches im Bereich seines unteren und im Bereich seines oberen Endes jeweils zumindest eine Öffnung aufweist und in dessen Inneren der Ultraschallsensor angeordnet ist. Die zumindest eine Öffnung am unteren Ende dient dazu, dass das Abwasser in das Rohr eintreten kann. Die zumindest eine

Öffnung am oberen Ende dient der Be- und Entlüftung. Vorzugsweise ist das Rohr einfach an seinen Stirnseiten offen ausgebildet. Es können jedoch auch einzelne Öffnungen in ansonsten geschlossenen Stirnseiten oder/und an den Umfangswandungen im Bereich der Enden ausgebildet sein. Das Rohr weist dabei eine Länge auf, dass es soweit in den Behälter nach unten hineinragt, dass es in das Wasser in dem Behälter eintaucht, zumindest dann, wenn das Wasser einen derart hohen Wasserstand erreicht hat, dass ein Einschalten der Pumpe erforderlich ist. Die Anordnung des Ultraschallsensors im Inneren des Rohres hat den Vorteil, dass das Ultraschallsignal auf einen Flüssigkeitsspiegel bzw. Wasserspiegel gesendet wird, welcher sich im Inneren des Rohres befindet. Dort ist der Flüssigkeitsspiegel beruhigt und nicht beispielsweise durch in den Behälter einströmendes Abwasser in Bewegung versetzt, sodass im Inneren des Rohres mittels des Ultraschallsensors stets eine genaue Höhenerfassung möglich ist. Darüber hinaus kann das Rohr auch Verunreinigungen, welche auf der Oberfläche des Wassers schwimmen, aus dem Bereich, in welchem die Messung mit dem Ultraschallsignal stattfindet, fernhalten.

Weiter bevorzugt ist die zumindest eine Öffnung im Bereich des oberen Endes des Rohres von diesem Ende nach unten beabstandet angeordnet, das obere Ende des Rohres selber geschlossen ausgebildet und der Ultraschallsensor vertikal oberhalb der Öffnung angeordnet. Durch diese Ausgestaltung wird am oberen Ende des Rohres oberhalb der Öffnung ein seitlich und nach oben geschlossener Raum gebildet, in welchem der Ultraschallsensor angeordnet ist. Vorzugsweise ist der Ultraschallsensor am oberen Ende dieses Raumes angeordnet. Der Raum ist nur nach unten hin geöffnet. Diese Ausgestaltung bewirkt, dass wenn das Wasser in dem Rohr über die Öffnungen am oberen Ende hinaus ansteigt, im oberen Ende des Rohres ein Luftvolumen gefangen wird, welches aufgrund der geschlossenen Gestaltung diesen oberen Endes nicht aus dem Rohr entweichen kann. Das Luftvolumen bewirkt dann, dass das Abwasser nicht direkt mit dem Ultraschallsensor in Kontakt kommen kann und schützt somit den Ultraschallsensor vor Verunreinigung durch das Abwasser. Auf diese Weise wird der Ultraschallsensor beispielsweise auch in dem Fall, dass eine Pumpe ausfallen sollte und der Behälter vollständig volllaufen sollte, vor Verunreinigung durch das Wasser geschützt.

An seinem unteren Ende ist das Rohr vorzugsweise offen ausgebildet, sodass von unten her das Abwasser ungehindert in das Rohr eintreten kann.

Das Rohr ist vorzugsweise so lang ausgebildet, dass die zumindest eine Öffnung im Bereich des unteren Endes des Rohres unterhalb des im Betrieb der Abwasserhebeanlage auftretenden minimalen Flüssigkeitsspiegels bzw. Wasserspiegels gelegen ist. Durch diese Ausgestaltung wird erreicht, dass Verunreinigungen, welche auf der Oberfläche des Abwasser schwimmen, beispielsweise Fett, Öl oder Schaum, nicht von unten in das Rohr eindringen können. So wird ein von Verunreinigungen freier Flüssigkeitsspiegel im Inneren des Rohres sichergestellt, welcher das Ultraschallsignal in der gewünschten Weise reflektieren kann.

Gemäß einer weiteren bevorzugten Ausführungsform ist der Füllstandsensor als eine in eine Öffnung des Behälters eingesetzte Baueinheit ausgebildet. Diese Ausgestaltung erleichtert die Montage, Wartung und gegebenenfalls Reparatur der Abwasserhebeanlage, da der Füllstandsensor als vormontierte Baueinheit in eine Öffnung des Behälter eingesetzt und gegebenenfalls zu Wartungs- oder Reparaturzwecken wieder entfernt werden kann. Der Füllstandsensor wird dazu vorzugsweise lösbar an einer Wandung des Behälters befestigt. Dies kann beispielsweise mittels Schrauben geschehen.

Besonders bevorzugt ist die Öffnung, in welche der Füllstandsensor eingesetzt wird, von einem Gewinde umgeben und der Füllstandsensor weist ein korrespondierendes Gewinde auf, mittels welchem er an dem Gewinde des Behälters verschraubt ist. So kann die Öffnung beispielsweise von einem zylindrischen von außen vom Behälter vorstehenden Kragen umgeben sein, welcher an seiner Außen- oder Innenseite mit einem entsprechenden Gewinde versehen ist. In dieses Gewinde kann der Füllstandsensor mit seinem korrespondierenden Gewinde eingeschraubt werden. Dabei ist zwischen beiden Teilen vorzugsweise zusätzlich eine Dichtung angeordnet, sodass der Füllstandsensor gegen die Wandung des Behälters abgedichtet ist, sodass aus diesem Bereich kein Wasser austreten kann, falls der Behälter volllaufen sollte.

Der Füllstandsensor weist gemäß der alternativen Ausführungsform der Erfindung ein Sensorgehäuse auf, welches an dem Behälter, insbesondere über ein Gewinde befestigt ist. Das Sensorgehäuse trägt den Ultraschallsensor und/oder nimmt den Ultraschallsensor in seinem Inneren auf. Falls ein Rohr in der oben beschriebenen Weise vorgesehen ist, so kann sich dieses vertikal von dem Sensorgehäuse nach unten in das Innere des Behälters hineinerstrecken. Das Sensorgehäuse kann mit einem Gewinde versehen sein, über welches das Sensorgehäuse mit dem Behälter verschraubt werden kann.

Gemäß der alternativen Ausführungsform der Erfindung ist der Ultraschallsensor lösbar in das Sensorgehäuse eingesetzt. Dies ermöglicht es, dass der Ultraschallsensor aus diesem zu Wartungs- und Reparaturzwecken leicht entnommen werden kann. Besonders bevorzugt ist der Ultraschallsensor mit einer Bajonettverbindung oder einem Gewinde mit dem Sensorgehäuse verbunden, um eine leichte Befestigung und ein leichtes Entfernen des Ultraschallsensors aus dem Sensorgehäuse zu ermöglichen.

Das Sensorgehäuse ist vorzugsweise nach unten offen ausgebildet. Auf diese Weise hat das Sensorgehäuse eine glockenförmige Gestalt, wobei seine Umfangswandung ein Gewinde zum Verschrauben mit einem entsprechenden Stutzen oder Vorsprung an einer Wandung des Behälters tragen kann. Mit dieser Form wird darüber hinaus sichergestellt, dass das Abwasser bis in das Sensorgehäuse zu dem Ultraschallsensor eindringen kann, falls der Behälter voll laufen sollte, da aufgrund der glockeförmigen, nur nach unten geöffneten Gestalt des Sensorgehäuses in diesem ein Luftvolumen gefangen würde, welches ein weiteres Eindringen von Abwasser verhindert.

So ist die zumindest eine Öffnung im Bereich des oberen Endes des Rohres vorzugsweise in einer nach unten geöffneten Tasche oberhalb einer oberen Wandung des Behälters gelegen. Dabei kann diese nach unten geöffnete Tasche durch das Sensorgehäuse gebildet werden. Bei dieser Anordnung kann der Behälter bis zu seiner Oberseite hin mit Abwasser volllaufen, das Abwasser kann jedoch nicht bis auf die Höhe der Öffnung im Bereich des oberen Endes des Rohres ansteigen und in diese eindringen. Die Öffnung wird so durch das in der Tasche gefangene Luftvolumen geschützt. Auf diese Weise wird verhindert, dass Verunreinigungen in dem Abwasser diese Öffnung verstopfen könnten.

Gemäß einer weiteren bevorzugten Ausführungsform ist es möglich, dass das Rohr des Füllstandsensors, welches ein Fokusrohr bzw. Schallführungsrohr bildet, in dessen Inneren das Ultraschallsignal auf die Wasseroberfläche gesendet wird, von einem weiteren Schutzrohr bzw. einer Schutzhülse umgeben ist. Diese rohrförmige Schutzhülse ist umfänglich um das Rohr beabstandet zu diesem angeordnet und vorzugsweise an ihren oberen und an ihrem unteren Ende mit Öffnungen versehen bzw. offen ausgebildet. Dabei ist die Öffnung am unteren Ende in vertikaler Richtung vorzugsweise unterhalb der Öffnung am unteren Ende des innenliegenden Rohres angeordnet. Die Öffnung am oberen Ende ist vorzugsweise vertikal oberhalb der oberen Öffnung des inneren Rohres d. h. des Fokusrohres angeordnet. Die Schutzhülse schützt das innere Rohr vor Verunreinigungen, welche auf der Oberfläche des Wassers schwimmen, beispielsweise Fett, Öl oder Schaum, sodass diese nicht in das innere Rohr, sei es durch die Öffnung am unteren Ende oder die Öffnung im Bereich des unteren Endes eintreten kann. So wird ein ausreichend sauberer, planer Flüssigkeitsspiegel im Inneren des Fokusrohres sichergestellt.

Nachfolgend wird die Erfindung beispielhaft anhand der beigefügten Figuren beschrieben. In diesen zeigt:

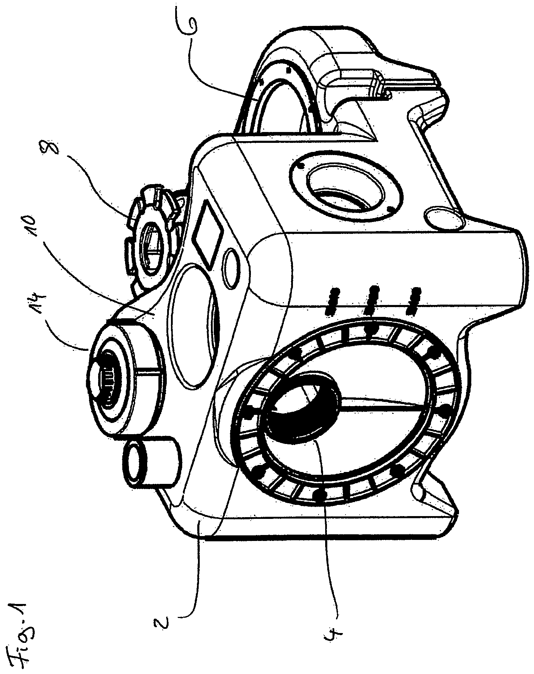

- Fig. 1: eine perspektivische Gesamtansicht einer erfindungsgemäßen Abwasserhebeanlage und

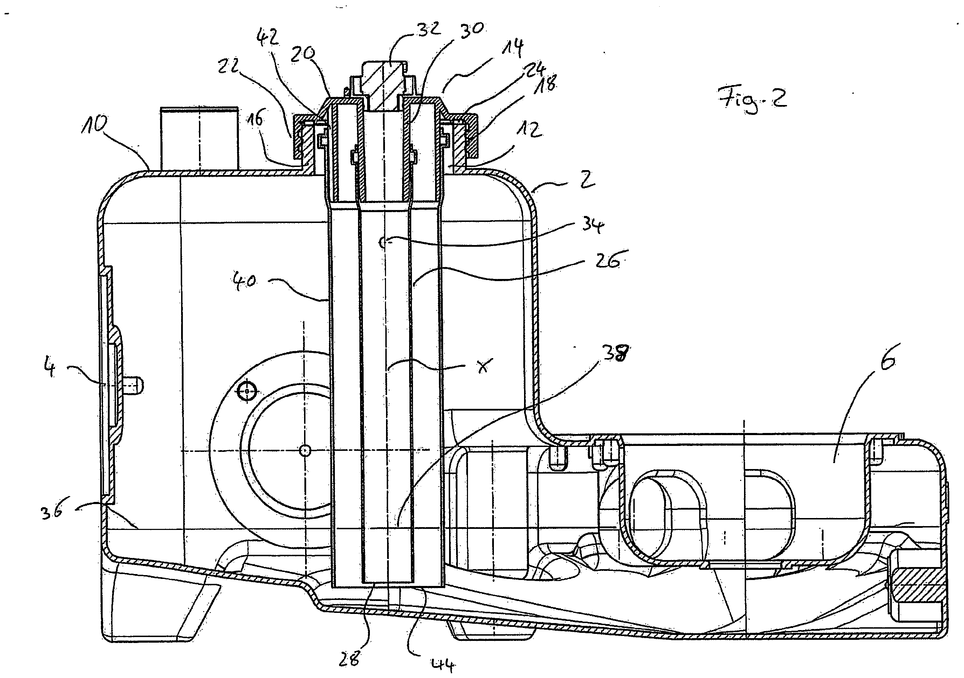

- Fig. 2: eine Schnittansicht durch die Abwasserhebeanlage gemäß Fig. 1 und den in dieser angeordneten Füllstandsensor.

Die gezeigte Abwasserhebeanlage weist einen Behälter 2, vorzugsweise aus Kunststoff auf. Der Behälter 2 weist eine Eintrittsöffnung 4 auf, an welcher eine Abwasserleitung angeschlossen werden kann, durch welche Abwasser in das Innere des Behälters 2 fließt. Ferner weist der Behälter eine Aufnahme 6 für eine hier nicht gezeigte Pumpe auf. Die Aufnahme 6 ist so ausgestaltet, dass die dort angeordnete Pumpe das Wasser aus dem Behälter über den Druckstutzen 8 in eine an diesen anzuschließende Ausgangs- bzw. Druckleitung fördern kann, durch welche das Abwasser dann auf ein höheres Niveau gefördert werden kann. An seiner Oberseite 10 weist der Behälter 2 eine Öffnung 12 auf, in welche der Füllstandsensor 14 eingesetzt ist.

Die Öffnung 12 ist von einem zylindrischen an der Oberseite nach außen vorstehenden Kragen bzw. Stutzen 16 umgeben, welcher an seinem Außenumfang mit einem Außengewinde 18 versehen ist.

Der Füllstandsensor 14 weist an seinem oberen Ende ein Sensorgehäuse 20 auf, welches glocken- bzw. topfförmig ausgebildet ist und eine nach unten gerichtete Umfangswandung 22 aufweist. Die Umfangswandung 22 ist kreiszylindrisch ausgebildet und weist an ihrem Innenumfang ein Innengewinde auf, welches in das Außengewinde 18 eingreift. So kann das Sensorgehäuse 20 auf den Stutzen 16 aufgeschraubt werden. Zwischen der Stirnseite des Stutzens 16 und dem Sensorgehäuse 20 ist darüber hinaus ein Dichtungsring 24 angeordnet, sodass bei aufgeschraubtem Sensorgehäuse 20 die Öffnung 12 nach außen abgedichtet ist. Von dem Sensorgehäuse 20 aus erstreckt sich in vertikaler Richtung X ein Rohr bzw. ein Fokusrohr 26 nach unten. Das Fokusrohr 26 ist an seinem unteren Ende 28 offen ausgebildet und an seinem oberen Ende mit einem rohrförmigen Vorsprung 30 des Sensorgehäuses 20 verbunden. Der rohrförmige Vorsprung 30 bildet dabei eine axiale Verlängerung des Fokusrohres 26 nach oben. In dem rohrförmigen Vorsprung 30 ist am oberen Ende ein Ultraschallsensor 32 angeordnet, welcher so das Fokusrohr 26 gleichzeitig an seinem oberen Ende dicht verschließt. Dazu kann zwischen dem Ultraschallsensor 32 und dem Sensorgehäuse 20 eine hier nicht gezeigte Dichtung angeordnet sein. Der Ultraschallsensor 32 ist lösbar in das Sensorgehäuse 20 eingesetzt und mil diesem beispielsweise über eine Bajonettverbindung lösbar verbunden. Vom oberen Ende beabstandet weist das Fokusrohr 26 darüber hinaus an der Umfangswandung eine Öffnung 34, auf welche eine Entlüftungsöffnung bildet.

Das Fokusrohr 26 erstreckt sich soweit nach unten, dass die Öffnung 28 zumindest ab einer bestimmten Höhe des Wasserstandes 36 in das Wasser eintaucht. Auf diese Weise steigt das Wasser auch im Inneren des Fokusrohres 26 an und hat dort einen Flüssigkeitsspiegel 38, welcher im Wesentlichen auf Höhe des Wasserstandes 36 liegt.

Der Ultraschallsensor 32 ist so ausgestaltet, dass er ein Ultraschallsignal in vertikaler Richtung nach unten im Inneren des Rohres 26 aussenden kann. Dieses Signal trifft auf den Flüssigkeitsspiegel 38 und wird von diesem vertikal nach oben reflektiert. Der Ultraschallsensor 32 weist ferner einen Aufnahme- bzw. Erfassungsbereich auf, mit welchem er dieses reflektierte Ultraschallsignal erfasst. Der Ultraschallsensor 32 ist so ausgebildet, dass er die Laufzeit des Signals vom Ultraschallsensor 32 zum Flüssigkeitsspiegel 38 und zurück erfassen kann. Die Laufzeit ist proportional zu dem Abstand zwischen Ultraschallsensor 32 und Flüssigkeitsspiegel 38, welcher so von dem Ultraschallsensor 32 oder einer an diesen angeschlossenen Auswerte- bzw. Steuereinrichtung erfasst werden kann. Auf diese Weise kann die Höhe des Flüssigkeitsspiegels bzw. Wasserstandes 36 von dem Ultraschallsensor 32 erfasst werden, ohne dass der Sensor selber mit dem Wasser in Kontakt kommen müsste. Es ist möglich, in einer Steuereinrichtung bestimmte Wasserstände bzw. Flüssigkeitsspiegel zu definieren, bei welchen dann eine oder mehrere Pumpen ein- oder ausgeschaltet werden.

Die Öffnung 34 zur Entlüftung dient dazu, dass bei ansteigenden Flüssigkeitsspiegel 38 in dem Fokusrohr 26 die Luft aus diesem entweichen kann. Die Öffnung 34 ist vom oberen Ende des Fokusrohres 26 vertikal nach unten beabstandet und somit insbesondere auch von dem Ultraschallsensor 32 beabstandet. Der Oberhalb der Öffnung 34 gelegene Bereich des Fokusrohres 26 ist geschlossen ausgebildet. Dies bewirkt, dass wenn der Flüssigkeitsspiegel über die Öffnung 34 hinaus ansteigt, in diesem Innenraum des Fokusrohres 26 ein Luftvolumen gefangen wird, welches den Ultraschallsensor 32 davor schützt, direkt mit dem Wasser in Kontakt zu kommen. Auf diese Weise wird der Ultraschallsensor vor Verunreinigungen geschützt. Darüber hinaus ist der Ultraschallsensor 32 am oberen Ende des Sensorgehäuses 20 beabstandet zu der Oberseite 10 des Behälters 2 gelegen. Das Sensorgehäuse 20 ist topf- bzw. glockenförmig ausgebildet und schließt somit im Inneren des Stutzens 16 ein oberhalb der Oberseite 10 gelegenes Luftvolumen ein. Dies bewirkt, dass, wenn das Wasser bis zur Oberseite 10 ansteigen sollte, es im Wesentlichen nicht weiter in das Innere des Sensorgehäuses 20 und des Stutzens 16 eindringen kann, da sich dort dann das gefangene Luftvolumen befindet. Auf diese Weise wird auch das Innere des Sensorgehäuses 2 vor Kontakt mit Abwasser und vor möglichen Verunreinigungen geschützt.

In dem hier gezeigten Beispiel ist darüber hinaus das Fokusrohr 26 noch von einer rohrförmigen Schutzhülse 40 umgeben. Diese weist einen größeren Durchmesser als das Fokusrohr 26 auf und ist somit in radialer Richtung von diesem beabstandet. Die Schutzhülse 40 ist an ihrem oberen und ihrem unteren Ende offen ausgebildet. Dabei erstreckt sie sich mit ihrem oberen Ende in den Stutzen 16 und das Sensorgehäuse 20 hinein, sodass die Öffnung 42 am oberen Ende der Schutzhülse 40 im Inneren des Sensorgehäuses nach oben beabstandet von der Oberseite 10 des Behälters 2 gelegen ist. Die Öffnung 42 befindet sich somit in dem Bereich, in welchem bei Anstieg des Wassers bis zur Oberseite 10 das vorangehend beschriebene Luftvolumen gefangen würde. Auf diese Weise wird verhindert, dass Abwasser in die Öffnung 42 eintreten und diese verstopfen kann, selbst wenn der Behälter bis zur Oberseite 10 volllaufen sollte. Es ist nur eine Öffnung 42 gezeigt, es ist jedoch zu verstehen, dass mehrere Öffnungen 42 vorgesehen sein können, wie auch mehrere Öffnungen 34 vorgesehen sein können. Die Schutzhülse 40 dient dazu, Verunreinigungen, welche auf der Oberfläche des Abwassers schwimmen, welches durch die Eintrittsöffnung 4 in den Behälter 2 eintritt, von dem Fokusrohr 26 fernzuhalten und zu verhindern, dass diese in dieses beispielsweise durch die Öffnungen 34 und 28 in ungewünschtem Maße eintreten können. Auf diese Weise wird verhindert, dass die Öffnung 34 verstopfen kann. Die Schutzhülse 40 ist so angeordnet und so ausgebildet, dass ihr unteres Ende 44 stets in das Wasser hineinragt, d. h. vorzugsweise unterhalb des minimalen Wasserstandes, welcher beim normalen Betrieb der Abwasserhebeanlage im Inneren des Behälters 2 auftreten kann, gelegen ist. Auf diese Weise wird sichergestellt, dass Verunreinigungen, welche durch die Eintrittsöffnung 4 in den Behälter 2 mit dem Abwasser einfließen und sich an der Oberfläche des Wassers sammeln, nicht in diese Schutzhülse 40 eintreten können. Das Fokusrohr 26 hingegen kann kürzer ausgebildet sein, sodass sein unteres Ende 28 vertikal oberhalb des unteren Endes 44 der Schutzhülse 40 gelegen ist. Vorzugsweise kann das untere Ende 28 so gelegen sein, dass es bei minimalem Wasserstand freiliegt, d. h. nicht in das Wasser eintaucht. Die Schutzhülse 40 bietet einen zusätzlichen Schutz für das Fokusrohr 26. Es ist jedoch zu verstehen, dass auf diese Schutzhülse 40 verzichtet werden kann, insbesondere dann, wenn das Fokusrohr 26 so lang ausgebildet ist, dass sein unteres Ende 28 im normalen Betrieb der Abwasserhebeanlage stets unterhalb des Wasserspiegels 36, d. h. auch unterhalb des minimal auftretenden Wasserspiegels gelegen ist. Dabei wird dann die Öffnung 34 bevorzugt vertikal weiter oben angeordnet, in dem Raum des Sensorgehäuses 20 und des Stutzens 16, in welchem sich bei Anstieg des Wasserspiegels bis zur Oberseite 10 des Behälters 2 ein eingeschlossenes Luftvolumen sammeln würde. Durch diese Ausgestaltung würde verhindert, dass das Abwasser, wenn es bis zur Behälteroberseite 10 ansteigt, in die Öffnung 34 eintritt und diese verschmutzen oder verstopfen könnte. Allerdings kann bei dieser Ausgestaltung das Problem auftreten, dass die Öffnung 34 näher zu dem Ultraschallsensor 32 platziert werden müsste und so bei maximalem Anstieg des Abwassers in dem Behälter, dieses in die Nähe des Ultraschallsensors 32 gelangen könnte, sodass dieser nicht mehr so gut vor Verschmutzung geschützt wäre. Der Ultraschallsensor 32 könnte dann vertikal weiter oben platziert werden, wodurch jedoch die Bauhöhe der Anlage sich dann gegebenenfalls vergrößert.

### Bezugszeichenliste

- 2 -: Behälter
- 4 -: Eintrittsöffnung
- 6 -: Aufnahme
- 8 -: Druckstutzen
- 10 -: Oberseite
- 12 -: Öffnung
- 14 -: Füllstandsensor
- 16 -: Stutzen
- 18 -: Außengewinde
- 20 -: Sensorgehäuse
- 22 -: Umfangswandung
- 24 -: Dichtungsring
- 26 -: Fokusrohr
- 28 -: unteres Ende
- 30 -: Vorsprung
- 32 -: Ultraschallsensor
- 34 -: Öffnung
- 36 -: Wasserstand
- 38 -: Flüssigkeitsspiegel
- 40 -: Schutzhülse
- 42 -: Öffnung
- 44 -: unteres Ende
- X -: Vertikale Richtung

## Patentansprüche

1. Abwasserhebeanlage mit einem Behälter (2) und einer in diesem oder außerhalb des Behälters angeordneten Pumpe und einem in dem Behälter (2) angeordneten Füllstandsensor (14), welcher einen Ultraschallsensor (32) aufweist und mit einer Steuereinrichtung signalverbunden ist oder eine Steuereinrichtung aufweist, welche in Abhängigkeit des Flüssigkeitsniveaus im Inneren des Behälters (2) die Pumpe ein- und ausschaltet, wobei der Ultraschallsensor (32) an einer Oberseite (10) des Behälters (2) angeordnet und derart ausgestaltet ist, dass er ein Ultraschallsignal zur Unterseite des Behälters (2) hin aussendet und ein von einem Flüssigkeitsspiegel (38) reflektiertes Signal erfasst und anhand des reflektierten Signals den Abstand des Flüssigkeitsspiegels (38) von dem Ultraschallsensor (32) bestimmt, **dadurch gekennzeichnet, dass**
der Füllstandsensor (14) ein sich vertikal in dem Behälter (2) erstreckendes Rohr (26, 30)
aufweist, welches im Bereich seines unteren Ende (28) und im Bereich seines oberen Endes jeweils zumindest eine Öffnung (34) aufweist, wobei
der Ultraschallsensor (32) im Inneren des Rohres (26) angeordnet ist
oder
wobei der Füllstandsensor (14) ein Sensorgehäuse (20) aufweist, welches an dem Behälter (2) befestigt ist und in welches der Ultraschallsensor (32) lösbar eingesetzt ist.

2. Abwasserhebeanlage nach Anspruch 1, **dadurch gekennzeichnet, dass** der Ultraschallsensor (32) derart ausgestaltet ist, dass er den Abstand aus der Laufzeit des Signals ermittelt.

3. Abwasserhebeanlage nach Anspruch 1 oder 2, **dadurch gekennzeichnet, dass** die zumindest eine Öffnung (34) im Bereich des oberen Endes von dem oberen Ende des Rohres (26, 30) nach unten beabstandet angeordnet ist, das obere Ende des Rohres (26, 30) geschlossen ausgebildet ist und der Ultraschallsensor (32) vertikal oberhalb der Öffnung (34) angeordnet ist.

4. Abwasserhebeanlage nach einem der vorangehenden Ansprüche, **dadurch gekennzeichnet, dass** das Rohr (26, 30) an seinem unteren Ende (28) offen ausgebildet ist.

5. Abwasserhebeanlage nach einem der vorhergehenden Ansprüche, **dadurch gekennzeichnet, dass** die zumindest eine Öffnung im Bereich des unteren Endes (28) des Rohres (26) unterhalb des im Betrieb der Abwasserhebeanlage auftretenden minimalen Flüssigkeitsspiegels (36) gelegen ist.

6. Abwasserhebeanlage nach einem der vorangehenden Ansprüche, **dadurch gekennzeichnet, dass** der Füllstandsensor (14) als eine ir eine Öffnung (12) des Behälters (2) eingesetzte Baueinheit ausgebildet ist.

7. Abwasserhebeanlage nach Anspruch 6, **dadurch gekennzeichnet, dass** die Öffnung (12) wobei des Behälters (2) von einem Gewinde (18) umgeben ist und der Füllstandsensor (14) ein korrespondierendes Gewinde aufweist, mittels welchem er an dem Gewinde (18) des Behälters (2) verschraubt ist.

8. Abwasserhebeanlage nach einem der vorangehenden Ansprüche, **dadurch gekennzeichnet, dass** das Sensorgehäuse (20) an dem Behälter (2) über ein wobei bzw. das Gewinde (18) befestigt ist

9. Abwasserhebeanlage nach einem der vorangehenden Ansprüche, **dadurch gekennzeichnet, dass** der Ultraschallsensor (32) mit einer Bajonettverbindung oder einem Gewinde mit dem Sensorgehäuse (20) verbunden ist.

10. Abwasserhebeanlage nach einem der vorangehenden Ansprüche, **dadurch gekennzeichnet, dass** das Sensorgehäuse (20) nach unten offen ausgebildet ist.

11. Abwasserhebeanlage nach einem der Ansprüche 7 bis 10 und einem der Ansprüche 3 bis 5, **dadurch gekennzeichnet, dass** das Rohr (26, 30) an dem Sensorgehäuse wobei (20) befestigt ist.

12. Abwasserhebeanlage nach einem der vorangehenden Ansprüche, **dadurch gekennzeichnet, dass** die zumindest eine Öffnung (34) im Bereich des oberen Endes des Rohres (26, 30) in einer nach unten geöffneten Tasche oberhalb einer oberen Wandung (10) des Behälters (2) gelegen ist.

## Claims

1. A waste water lifting installation with a container (2) and with a pump which is arranged in this or outside the container and with a level sensor (14) which is arranged in the container (2), comprises an ultrasound sensor (32) and is signal-connected to a control device or comprises a control device, said control device switching the pump on and off in dependence on the fluid level in the inside of the container (2), wherein
the ultrasound sensor (32) is arranged on an upper side (10) of the container (2) and is designed in a manner such that it emits an ultrasound signal towards the lower side of the container (2) and detects a signal reflected by a fluid surface (38) and determines the distance of the fluid surface (38) to the ultrasound sensor (32) by way of the reflected signal,
**characterised in that**
the level sensor (14) comprises a tube (26, 30) which extends vertically in the container (2) and which in the region of its lower end (28) and in the region of its upper end in each case comprises at least one opening (34), wherein
the ultrasound sensor (32) is arranged in the inside of the tube (26) or
wherein the level sensor (14) comprises a sensor housing (20) which is fastened to the container (2) and into which the ultrasound sensor (32) is releasably inserted.

2. A waste water lifting installation according to claim 1, **characterised in that** the ultrasound sensor (32) is designed in a manner such that it determines the distance from the running time of the signal.

3. A waste water lifting installation according to claim 1 or 2, **characterised in that** the at least one opening (34) in the region of the upper end is arranged in a manner distanced downwards from the upper end of the tube (26, 30), the upper end of the tube (26) is designed in a closed manner and the ultrasound sensor (32) is arranged vertically above the opening (34).

4. A waste water lifting installation according to one of the preceding claims, **characterised in that** the tube (26, 30) is designed in an open manner at its lower end (28).

5. A waste water lifting installation according to one of the preceding claims, **characterised in that** the at least one opening is situated in the region of the lower end (28) of the tube (26) below the minimal fluid level (36) occurring on operation of the waste water lifting installation.

6. A waste water lifting installation according to one of the preceding claims, **characterised in that** the level sensor (14) is designed as a construction unit which is inserted into an opening (12) of the container (2).

7. A waste water lifting installation according to claim 6, **characterised in that** the opening (12) of the container (2) is surrounded by a thread (18), and the level sensor (14) comprises a corresponding thread, by way of which it is screwed on the thread (18) of the container (2).

8. A waste water lifting installation according to one of the preceding claims, **characterised in that** the sensor housing (20) is fastened to container (2) via a or the thread (18).

9. A waste water lifting installation according to one of the preceding claims, **characterised in that** the ultrasound sensor (32) is connected to the sensor housing (20) with a bayonet connection or with a thread.

10. 1A waste water lifting installation according to one of the preceding claims, **characterised in that** the sensor housing (20) is designed open to the bottom.

11. A waste water lifting installation according to one of the claims 7 to 10 and one of the claims 3 to 5, **characterised in that** the tube (26, 30) is fastened to the sensor housing (20).

12. A waste water lifting installation according to one of the preceding claims, **characterised in that** the at least one opening (34) is situated in the region of the upper end of the tube (26, 30) in a pocket above an upper wall (10) of the container (2), said pocket being open to the bottom.

## Revendications

1. Installation de relèvement d'eaux usées comprenant une cuve (2) et une pompe disposée à l'intérieur ou à l'extérieur de la cuve et un capteur de niveau de remplissage (14) disposé dans la cuve (2), qui comporte un capteur d'ultrasons (32) et est relié par signal à un dispositif de commande ou comporte un dispositif de commande qui met en marche ou arrête la pompe en fonction du niveau de liquide à l'intérieur de la cuve (2), le capteur d'ultrasons (32) étant disposé à une face supérieure (10) de la cuve (2) et étant configuré de façon qu'il émette un signal d'ultrasons vers la face inférieure de la cuve (2) et reçoive un signal réfléchi par une surface de liquide (38) et détermine, sur la base du signal réfléchi, la distance de la surface de liquide (38) du capteur d'ultrasons (32),
**caractérisée en ce que** le capteur de niveau de remplissage (14) comprend un tuyau (26, 30) s'étendant verticalement dans la cuve (2), qui est pourvu, respectivement dans la zone de son extrémité inférieure (28) et dans la zone de son extrémité supérieure, d'au moins une ouverture (34),
le capteur d'ultrasons (32) étant disposé à l'intérieur du tuyau (26) ou
le capteur de niveau de remplissage (14) comprenant un boîtier de capteur (20) qui est fixé à la cuve (2) et dans lequel le capteur d'ultrasons (32) est inséré de façon amovible.

2. Installation de relèvement d'eaux usées selon la revendication 1, **caractérisée en ce que** le capteur d'ultrasons (32) est configuré de façon qu'il détermine la distance à partir du temps de parcours du signal.

3. Installation de relèvement d'eaux usées selon la revendication 1 ou 2, **caractérisée en ce que** ladite au moins une ouverture (34) dans la zone de l'extrémité supérieure est disposée à une distance de l'extrémité supérieure du tuyau (26, 30) vers le bas, que l'extrémité supérieure du tuyau (26, 30) est formée fermée et que le capteur d'ultrasons (32) est disposé verticalement au-dessus de l'ouverture (34).

4. Installation de relèvement d'eaux usées selon l'une des revendications précédentes, **caractérisée en ce que** le tuyau (26, 30) est formé ouvert à son extrémité inférieure (28).

5. Installation de relèvement d'eaux usées selon l'une des revendications précédentes, **caractérisée en ce que** ladite au moins une ouverture dans la zone de l'extrémité inférieure (28) du tuyau (26) est située en-dessous du niveau de liquide (36) minimal se présentant lors du fonctionnement de l'installation de relèvement d'eaux usées.

6. Installation de relèvement d'eaux usées selon l'une des revendications précédentes, **caractérisée en ce que** le capteur de niveau de remplissage (14) est configuré comme une unité modulaire insérée dans une ouverture (12) de la cuve (2).

7. Installation de relèvement d'eaux usées selon la revendication 6, **caractérisée en ce que** l'ouverture (12) de la cuve (2) est entourée d'un taraudage (18) et que le capteur de niveau de remplissage (14) comprend un filetage correspondant à l'aide duquel il est vissé au taraudage (18) de la cuve (2).

8. Installation de relèvement d'eaux usées selon l'une des revendications précédentes, **caractérisée en ce que** le boîtier de capteur (20) est fixé à la cuve (2) à l'aide d'un ou respectivement du taraudage (18).

9. Installation de relèvement d'eaux usées selon l'une des revendications précédentes, **caractérisée en ce que** le capteur d'ultrasons (32) est attaché au boîtier de capteur (20) à l'aide d'une fixation à baïonnette ou d'un filetage.

10. Installation de relèvement d'eaux usées selon l'une des revendications précédentes, **caractérisée en ce que** le boîtier de capteur (20) est formé ouvert vers le bas.

11. Installation de relèvement d'eaux usées selon l'une des revendications 7 à 10 et une des revendications 3 à 5, **caractérisée en ce que** le tuyau (26, 30) est fixé au boîtier de capteur (20).

12. Installation de relèvement d'eaux usées selon l'une des revendications précédentes, **caractérisée en ce que** ladite au moins une ouverture (34) dans la zone de l'extrémité supérieure du tuyau (26, 30) est située dans une poche ouverte vers le bas, au-dessus d'une paroi (10) supérieure de la cuve (2).
